(19) Europäisches Patentamt
European Patent Office
Office européen des brevets

(11) Veröffentlichungsnummer: **0 354 347**
**A2**

(12) # EUROPÄISCHE PATENTANMELDUNG

(21) Anmeldenummer: 89112307.7

(22) Anmeldetag: 06.07.89

(51) Int. Cl.⁴: C09K 19/20 , C09K 19/22 , C09K 19/24 , C08L 67/04

(30) Priorität: 19.07.88 DE 3824365

(43) Veröffentlichungstag der Anmeldung: 14.02.90 Patentblatt 90/07

(84) Benannte Vertragsstaaten: DE ES FR GB IT NL

(71) Anmelder: BAYER AG

D-5090 Leverkusen 1 Bayerwerk(DE)

(72) Erfinder: Pielartzik, Harald, Dr.
Doerperhofstrasse 39
D-4150 Krefeld(DE)
Erfinder: Meyer, Rolf-Volker, Dr.
Buchheimerstrasse 23
D-4150 Krefeld(DE)
Erfinder: Dujardin, Ralf, Dr.
Bodelschwinghstrasse 18
D-4150 Krefeld(DE)
Erfinder: Schnitzler, Axel, D. I.
Zum Stadtbad 9
D-4018 Langenfeld(DE)
Erfinder: Traenckner, Hans-Joachim, Dr.
Wedelstrasse 46
D-4150 Krefeld(DE)

(54) **Flüssig-kristalline Verbindungen, ihre Herstellung und Verwendung als Modifikatoren für Polycarbonate, Polyestercarbonate und Polyester.**

(57) Gegenstand der vorliegenden Erfindung sind aromatische Verbindungen der Formel (I)

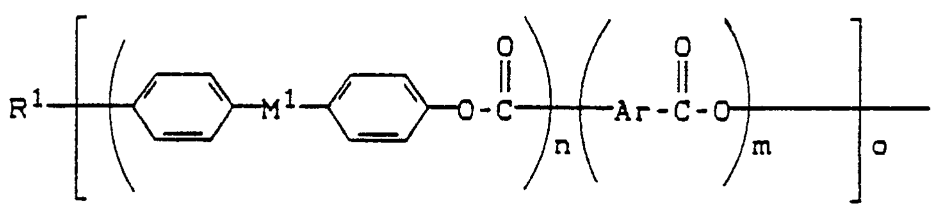

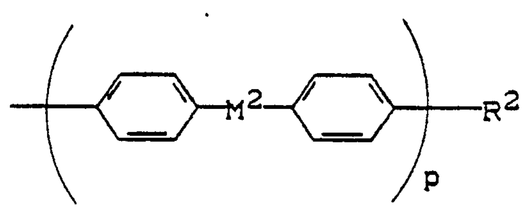

(I)

ihre Herstellung und Verwendung als Modifikatoren für thermoplastische, aromatische Polycarbonate und/oder thermoplastische, aromatische Polyestercarbonate und/oder thermoplatische, aromatische Polyester.

EP 0 354 347 A2

# Flüssig-kristalline Verbindungen, ihre Herstellung und Verwendung als Modifikatoren für Polycarbonate, Polyestercarbonate und Polyester

Gegenstand der vorliegenden Erfindung sind aromatische Verbindungen der Formel (I)

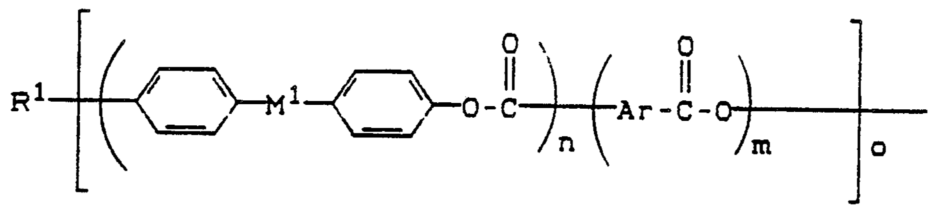

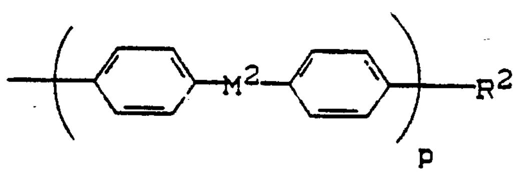

(I)

worin
-Ar ein aromatischer Rest ist der einkernig oder mehrkernig sein, wobei der mehrkernige Rest einbindig verknüpft oder annelliert sein kann,
worin
$R^1$ und $R^2$ gleich oder verschieden sein können und H, Chlor, O-$C_1$-$C_4$-Alkyl, -O-$C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl, oder ein Rest der Formeln (I) a) bis l) sind,

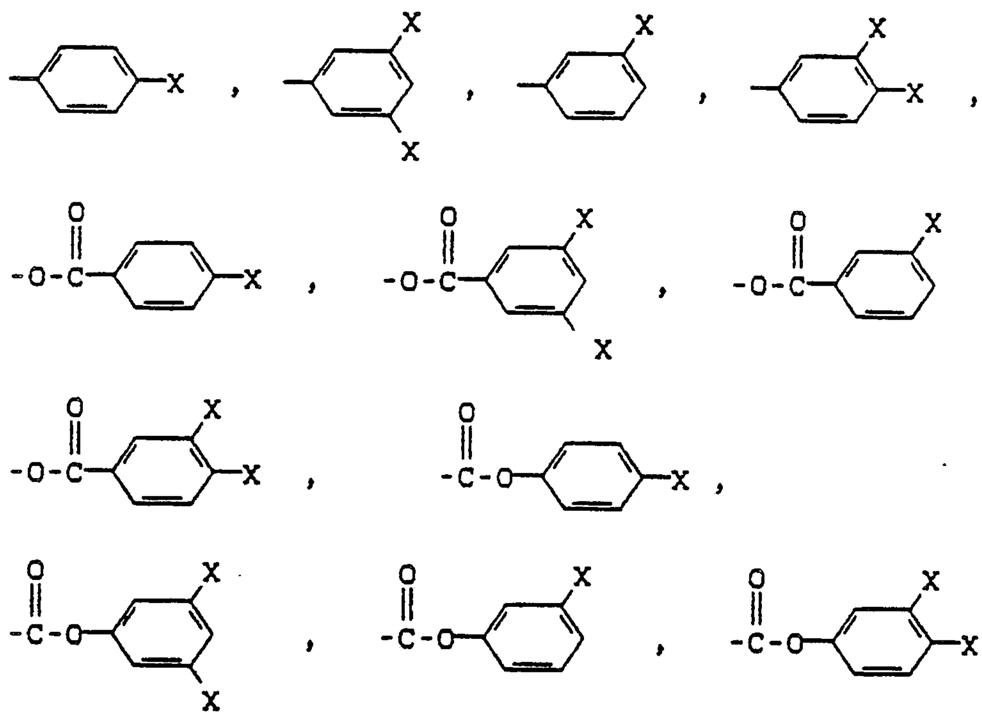

(Ia) - (Il)

wobei
X wiederum die vorstehend für $R^1$ bzw. $R^2$ genannten Reste von H bis fluoriertes $C_6$-$C_{14}$-Aryl ist,

worin $-M^1$ und $-M^2$ gleich oder verschieden sind und zweibindige Reste der Formeln (I.1) bis (I.11)

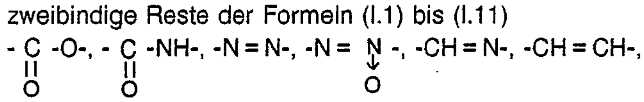

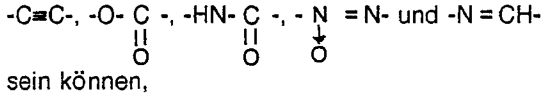

(I.1) - (I.11)

sein können,
und worin
m Null, 1 oder 2,
n 1 oder 2,
o 1, 2 oder 3 und
p Null oder 1 sind, wobei im Falle von p = Null
$R^2$ nur (Ia), (Ib), (Ic) oder (Id) sein kann, und
wobei die Verbindungen Nr. 1, 2 und 10 von Seiten 5 und 7 der vorliegenden Patentanmeldung ausgenommen sind.

Bevorzugte Reste -Ar- sind die Reste (Ar1) bis (Ar4)

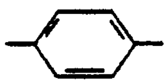 , 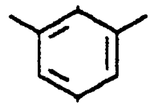 , 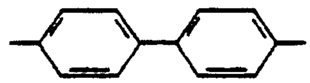 ,

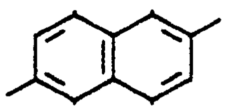

(Ar1)-(Ar4)

Bevorzugte Rest $R^1$ und $R^2$ sind H, $CH_3$, $OCH_3$, Cyclohexyl, Phenyl, $CF_3$, $OCF_3$, fluoriertes Cyclohexyl und fluoriertes Phenyl.

Bevorzugte Reste -M- sind (I.1), (I.2), (1.5), (I.8), (I.9) und (1.11).

Bevorzugte Indexkombinationen m, n, o, p und q sind
m = Null, n = 1, o = 1, p = Null;
m = Null, n = 1, o = 1, p = 1;
m = Null, n = 2, o = 1, p = 1;
m = n = o = p = 1;
m = 1, n = 1, o = 2, p = 1;
m = Null, n = 2, o = 1, p = Null;
m = 1, n = 2, o = 1, p = 1 und
m = 1, n = 1, o = 3, p = 1.

Die Verbindungen der Formel (I) zeichnen sich dadurch aus, daß sie beim Schmelzen eine flüssigkristalline Phase durchlaufen. (Bezüglich flüssigkristalliner Verbindungen bzw. Phasen siehe beispielweise:
D. Demus, L. Richter, Textures of Liquid Crystals, Verlag Chemie, Weinheim - New York 1978 oder
H. Kelker, R. Hatz, Handbook of Liquid Crystals Verlag Chemie, Weinheim, Deerfield 1080).

Als Verbindungen der Formel (I) seien beispielsweise die folgenden vier Gruppen von Verbindungen (I,A) bis (I,D) genannt:

(I,A) Flüssigkristalline Verbindungen der Formel (I) mit drei aromatischen Teilstrukturen,
worin
m = Null, n = 1, o = 1 und p = Null sind,
wobei die Verbindungen 1 und 2 bereits literaturbekannt sind, und zwar aus D. B. Schroeder, J. Org. Chem. 38, 3160 (1973) beziehungsweise aus J.P. Van Meten, B.H. Klanderman, Mol. Cryst., Liquid Cryst. 1973, Vol. 22, Seiten 285 ff..

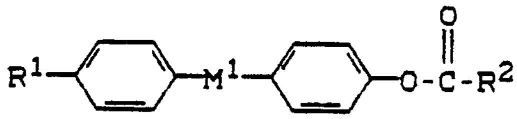

| Nr. | $R^1$ | $M^1$ | $R^2$ |
|---|---|---|---|
| 1 | $CH_3$ | 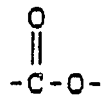 | 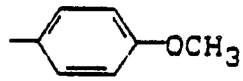 |
| 2 | $CH_3O-$ | 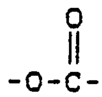 | 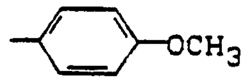 |
| 3 | $CH_3O-$ | 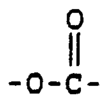 | 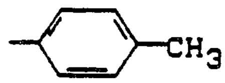 |
| 4 | $CH_3$ | 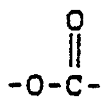 | 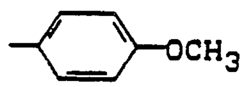 |

(I,B) Flüssigkristalline Verbindungen der Formel (I) mit vier aromatischen Teilstrukturen worin wieder m = Null, n = 1, o = 1 und p = Null sind:

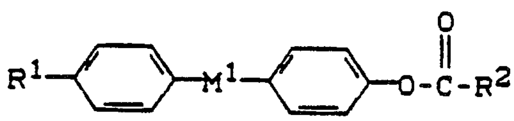

| Nr. | $R^1$ | $M^1$ | $R^2$ |
|---|---|---|---|
| | 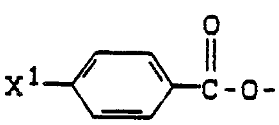 | 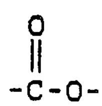 | 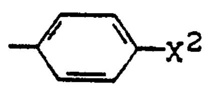 |
| 5 | $X^1$=H | | $X^2$=H |
| 6 | $CH_3$ | | $CH_3$ |
| 7 | $OCH_3$ | | $OCH_3$ |
| 8 | $CF_3$ | | $CF_3$ |
| 9 | Cl | | Cl |

(I,C) Flüssigkristalline Verbindungen der Formel (I) mit fünf aromatischen Teilstrukturen worin m = n = o = p = 1 sind.

Hierbei ist Verbindung 10 bereits in der Literatur genannt, und zwar bei V.N. Tsvetkov. Eur. Polym. J. Vol. 21, No 11, Seite 933 (1985).

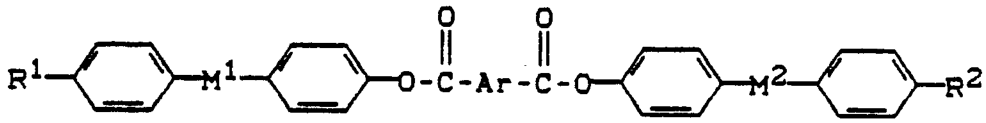

| Nr. | $R^1$ | $M^1$ | $M^2$ | $R^2$ | Ar |
|---|---|---|---|---|---|
| 10 | H | 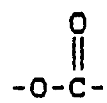 | 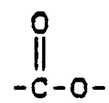 | H | 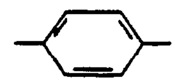 |
| 11 | $CH_3$ | " | " | $CH_3$ | " |
| 12 | $OCH_3$ | " | " | $OCH_3$ | " |
| 13 | H | 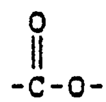 | 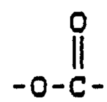 | H | " |
| 14 | $CH_3$ | " | " | $CH_3$ | " |
| 15 | $OCH_3$ | " | " | $OCH_3$ | " |

(I,D) Flüssigkristalline Verbindungen der Formel (I) mit sieben aromatischen Teilstrukturen, worin wieder m = n = o = p = 1 sind:

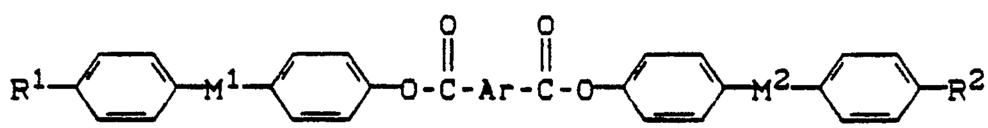

| Nr. | $R^1$ | $M^1$ | Ar | $M^2$ | $R^2$ |
|---|---|---|---|---|---|
| 16 | 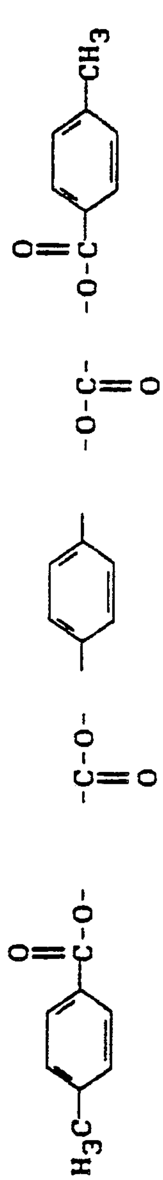 | | | | |
| 17 | 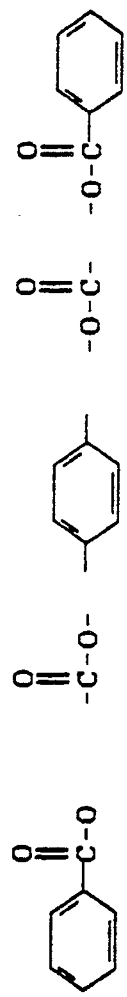 | | | | |
| 18 | 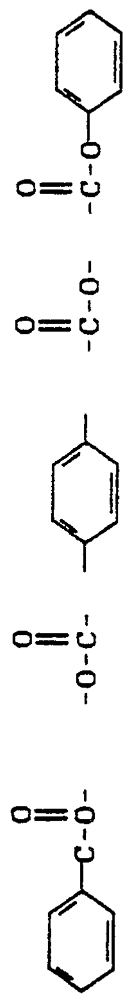 | | | | |
| 19 | 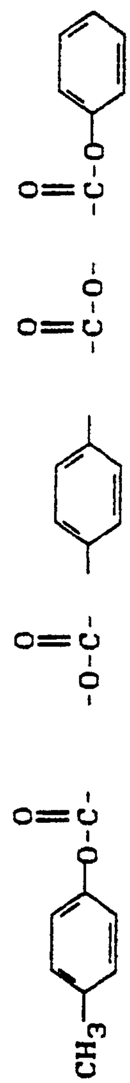 | | | | |

Bevorzugte Verbindungen der Formel (I) sind solche, die 3 bis 15 aromatische Teilstrukturen enthalten, wobei der Rest -Ar- als eine Teilstruktur gewählt ist, unabhängig davon, ob er einkernig oder mehrkernig ist. Besonders bevorzugte Verbindungen der Formel (I) sind solche, die 3 bis 11 aromatische Teilstrukturen enthalten, wobei wiederum der Rest -Ar- als eine aromatische Teilstruktur gewählt ist, unabhängig davon ob er einkernig oder mehrkernig ist. Ganz besonders bevorzugte Verbindungen der Formel (I) sind solche, die 3 bis 7 aromatische Teilstruckturen im vorstehend definierten Sinne haben.

Die Herstellung der Verbindungen der Formel (I) kann, rein formal gesehen, aus den folgenden Bausteinen (II) bis (VIII) erfolgen:

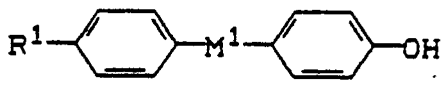

(II)

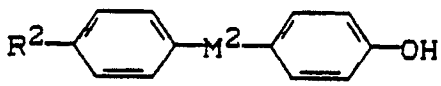

(III)

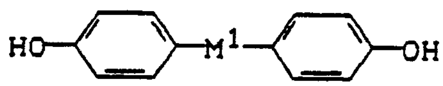

(IV)

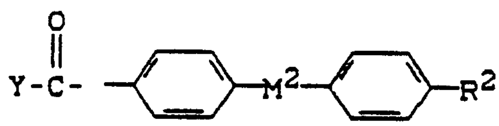

(V)

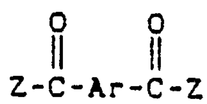

(VI)

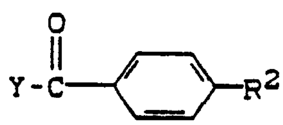

(VII)

In den Formeln (II) bis (VIII) haben $M^1$, $M^2$ und Ar die für Formel (I) genannte Bedeutung, $R^1$ und $R^2$ haben ebenfalls die für Formel (I) genannte Bedeutung; zusätzlich können $R^1$ und $R^2$ noch die Funktion einer leicht abspaltbaren Schutzgruppe wie z.B.

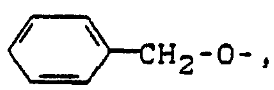

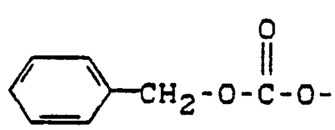

und

$R_3Si$-O- besitzen.

Y und Z sind reaktive Reste von aromatischen Carbonsäurederivaten, beispielsweise Cl, Br oder Anhydridgruppierungen. Reaktiv ist in diesem Zusammenhang die Befähigung der Carbonsäurederivate zur Bildung von Estern mit Phenolen oder Phenolaten.

Y kann zusätzlich zu der definierten Funktion eines reaktiven Restes bei der Herstellung von Zwischenstufen noch eine leicht abspaltbare Schutzgruppe z.B.

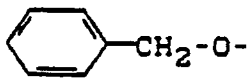 oder

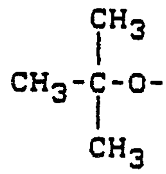 bedeuten.

Im einzelnen erfolgt die Herstellung der erfindungsgemäßen Verbindungen der Formel (I) durch Umsetzung der phenolischen Verbindungen (II) und/oder (III) und/oder (IV) oder deren Alkalisalze mit den reaktiven Derivaten aromatischer Carbonsäuren (V) und/oder (VI) und/oder (VII), wobei diese Veresterungsreaktionen nach bekannten Methoden durchgeführt werden können, beispielsweise gemäß Houben-Weyl, Methoden der organischen Chemie, Ergänzungsband E5.

Bevorzugt werden diese Veresterungsreaktionen in einem basischen Milieu durchgeführt, wobei als Basen insbesondere Alkalimetallhydroxide wie Natrium- oder Kaliumhydroxid, Alkalimetallcarbonate bzw. -hydrogencarbonate wie Natriumcarbonat, Natriumhydrogencarbonat, Kaliumcarbonat oder Kaliumhydrogencarbonat, Alkalimetallacetate wie Natrium- oder Kaliumacetat, Erdalkalimetallhydroxide wie Calciumhydroxid oder organische Basen wie Triethylamin, Diisopropylethylamin, 1,8-Bis(dimethylamino)naphthalin, Pyridin, Lutidin, Kollidin, Chinolin oder N,N-Dimethylanilin von Bedeutung sind.

Die Veresterungen werden vorteilhaft in Gegenwart eines inerten Lösungsmittels durchgeführt. Gut geeignet sind insbesondere Ether wie Diethylether, Di-n-butylether, Tetrahydrofuran, Dioxan oder Anisol, Ketone wie Aceton, Butanon, Pentanon-(3) oder Cyclohexanon, Amide wie Dimethylformamid oder Hexamethylphosphorsäuretriamid, Kohlenwasserstoffe wie Benzol, Toluol oder Xylol, Halogenkohlenwasserstoffe wie Tetrachlorkohlenstoff oder Tetrachlorethylen und Sulfoxide wie Dimethylsulfoxid oder Sulfolan. Gelegentlich kann auch ein Überschuß einer verwendeten organischen Base, z.B. Pyridin, Chinolin, N,N-Dimethylanilin oder Triethylamin als Lösungsmittel für die Veresterung angewandt werden. Prinzipiell können die Veresterungsreaktionen nach der Erfindung auch in Abwesenheit der Hilfsbase, z.B. durch einfaches Erhitzen der Komponenten in einem inerten Lösungsmittel, durchgeführt werden.

Die Reaktionstemperatur liegt gewöhnlich zwischen -50°C und +200°C, vorzugsweise zwischen -20°C und +160°C. Bei diesen Temperaturen sind die Veresterungsreaktionen in der Regel nach 15 Minuten bis 48 Stunden beendet.

Gegenstand der vorliegenden Erfindung ist somit auch ein Verfahren zur Herstellung der Verbindungen der Formel (I), das dadurch gekennzeichnet ist, daß man phenolische Verbindungen der Formeln (II) und/oder (III) und/oder (IV) oder deren Alkalisalze, mit reaktiven Derivaten aromatischer Carbonsäuren der Formeln (V) und/oder (VI) und/oder (VII) in Abhängigkeit von der Funktionalität der Reaktanten (II) bis (VII) unter Berücksichtigung der auszunutzenden Schutzgruppen und in Abhängigkeit von den zu erzielenden Werten für die Indeces "m", "n", "o" und "p" der Formel (I) nach bekannten Verfahren verestert.

Eine bevorzugte Ausführungsform des erfindungsgemäßen Verfahrens besteht darin, daß man die phenolischen Verbindungen in einem organischen Lösungsmittel, beispielsweise in Diethylether, Dioxan, Tetrahydrofuran oder $CH_2Cl_2$, mit einer äquimolaren Menge an organischer Base, beispielsweise Triethylamin, Pyridin oder N,N-Dimethylanilin, suspendiert und bei Temperaturen von -10°C bis +10°C unter Rühren das entsprechende aromatische Carbonsäurehalogenid, vorzugsweise das entsprechende aromatische Carbonsäurechlorid, in den berechneten Mengen eintropft. Anschließend wird etwa 10 bis 16 Stunden bei etwa 20°C nachgerührt, das organische Lösungsmittel im Vakuum entfernt und zur Abtrennung der Hydrohalogenide der organischen Basen der Rückstand in Wasser aufgenommen und das Produkt abgesaugt und mit $H_2O$ neutral gewaschen.

Eine andere Verfahrensvariante des erfindungsgemäßen Verfahrens besteht darin, daß man die phenolischen Verbindungen in äquimolaren Mengen 10 %iger wäßriger NaOH-oder KOH-Lösung auflöst, unter Kühlen das entsprechende aromatische Carbonsäurehalogenid in den berechneten Mengen zusetzt, das ausgefallene Reaktionsprodukt absaugt, mit $H_2O$ neutral wäscht und trocknet.

Die phenolischen Verbindungen der Formel (II) sind entweder literaturbekannt (siehe beispielsweise J.B. Schroeder, J. Org. Chem. 38 3160 (1973) und J.P. von Meter, B.H. Klandermann, Mol. Cryst. Liquid Cryst. 1973, 22, 285) oder nach bekannten Verfahren beispielsweise wie folgt herstellbar:

$M^{1/2}$ = -COO-

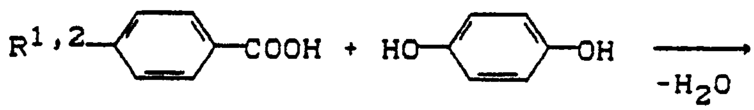


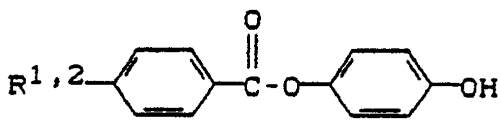

IIa/IIIa

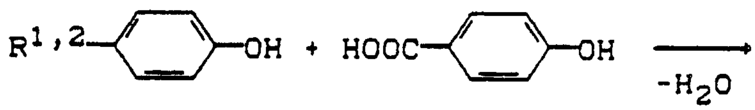


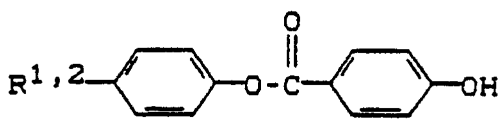

IIb/IIIb

Diese Direktveresterungsreaktionen werden in einem als Wasserschleppmittel geeigneten Solvens unter saurer Katalyse nach literaturbekannten Methoden durchgeführt (siehe z.B. Houben-Weyl, Methoden der organischen Chemie, Ergänzungsband E5). Als Lösungsmittel kommen beispielsweise Toluol, Xylol, Chlorbenzol, Dichlorbenzol in Frage.

$M^{1/2}$ = -CO-NH-

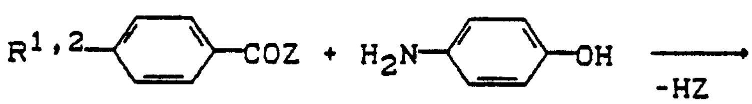


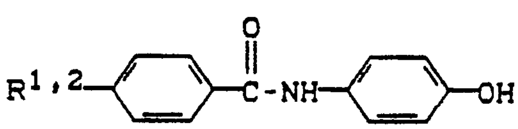

IIc/IIIc

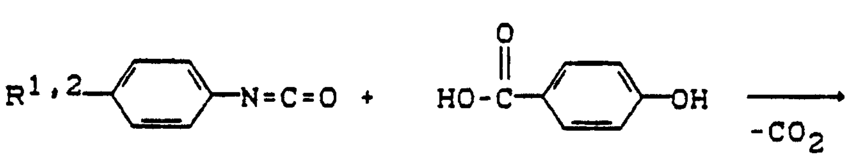


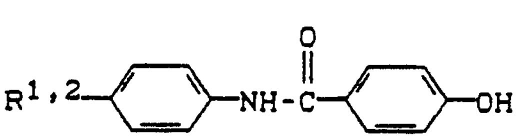

IId/IIId

Methoden zur Herstellung sind beispielsweise von M. Ueda in J. Org. Chem. 50, 760 beschrieben.

In speziellen Fällen ist es sinnvoll die phenolische OH-Gruppe durch eine Schutzgruppe zu blockieren.

Geeignete Methoden für die Durchführung sowohl der Amidbildung als auch der Blockierung von phenolischen OH-Gruppen sind in der Literatur beschrieben, beispielsweise in Houben-Weyl, Methoden der organischen Chemie oder von W.R. Krigbaum in Euro. Polym. J. Vol 20, 225 (1984).

Die Reaktion von Isocyanaten und Carbonsäuren ist ebenfalls bekannt und in Houben-Weyl, Methoden der organischen Chemie E5 beschrieben.

$M^{1/2}$ = -CH=N-

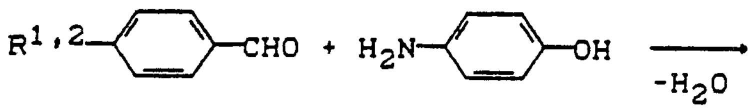


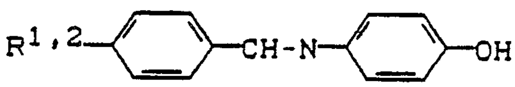

IIe/IIIe

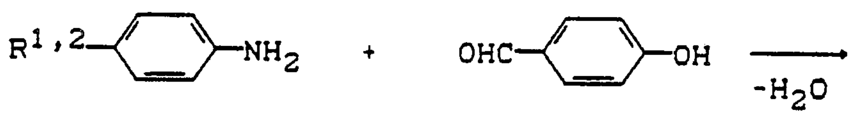


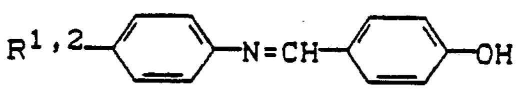

IIf/IIIf

Die Synthese von Aminen durch Kondensation von Amiden mit Aldehyden ist literaturbekannt und in Houben-Weyl, Methoden der organischen Chemie beschrieben oder bei H. Ringsdorf, Makromol. Chem. 30, 36.

Verbindung (IV) wird durch Direktveresterung von p-Hydroxybenzoesäure mit Hydrochinon nach DE-OS 3 622 611 hergestellt.

Die reaktiven Derivate der aromatischen Carbonsäuren (V) werden auf folgendem Wege hergestellt:

$M^2$ = -COO-

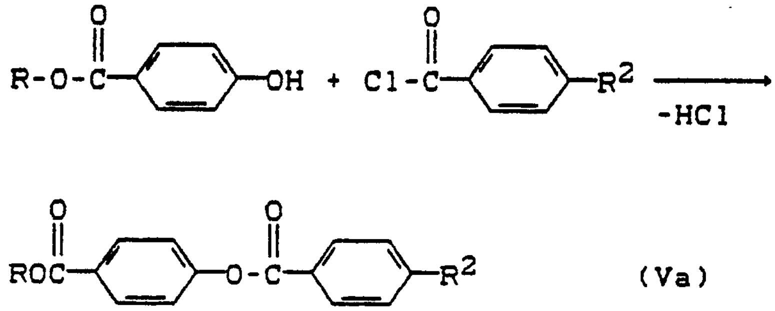


(Va)

R: z.B. 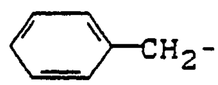 oder 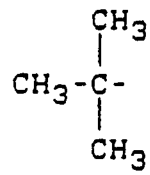

Weiterer Syntheseweg: 1) Abspaltung de Schutzgruppe R durch Hydrierung oder Thermolyse, 2) Überführung der freien Carboxylgruppe in eine reaktive Form $Y-\overset{O}{\overset{\|}{C}}-$ bzw. $Z-\overset{O}{\overset{\|}{C}}-$ nach literaturbekannten Methoden.

$M^2$ = -NH-CO-

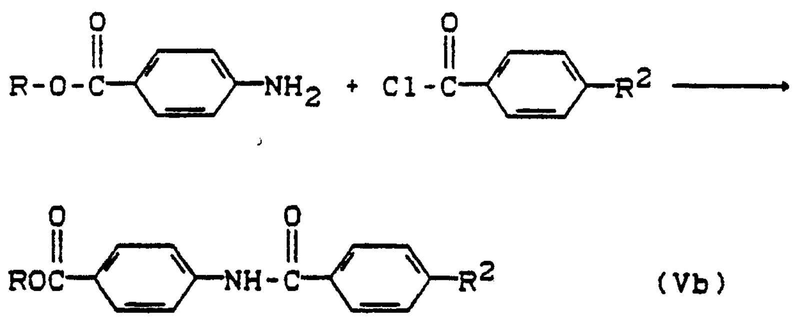

(Vb)

Der weitere Syntheseweg entspricht dem für Verbindung (Va).

R hat dieselbe Bedeutung wie in (Va). Die Herstellung von (Vb) ist außerdem bei O. Exner, Coll. Czeeh. Chem. Commun, 1970, 1371 beschrieben.

$M^2$ = -CH=N-

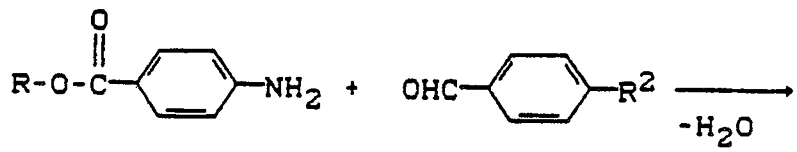


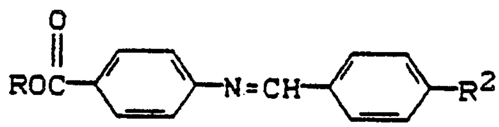
(Vc)

R hat dieselbe Bedeutung wie in (Va). Der weitere Synthesegang entspricht dem der Verbindung (Va).

Die reaktiven Derivate der aromatischen Dicarbonsäuren (VI) und der aromatischen Carbonsäuren (VII) sind literaturbekannt und werden durch bekannte Reaktionen hergestellt. Schutzgruppenhaltige reaktive Carbonsäurederivate (VII) z.B. 4-Carbobenzoxybenzoesäurederivate werden nach W.R. Krigbaum, Eurp. Polym. J. 20, 225 (1984) hergestellt.

Die Herstellung der erfindungsgemäßen flüssigkristallinen Verbindungen aus den Grundbausteinen (II), (III), (IV), (V), (VI) und (VII) und anderen Hilfsstoffen ist im folgenden kurz skizziert.

3-Kern-Verbindungen (m = Null, n = 1, o = 1, p = Null):

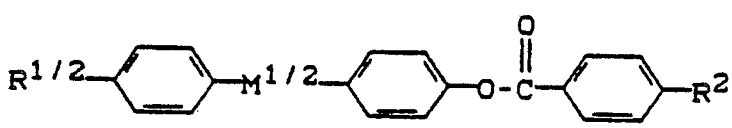

werden aus Phenolen des Typs (II) bzw. (III) durch Veresterung mit reaktiven aromatischen Carbonsäuren hergestellt.

4-Kern-Verbindung:

erhält man durch Veresterung des Esterbiphenols (IV) mit 2 Molen eines reaktiven aromatischen Carbonsäurederivates:

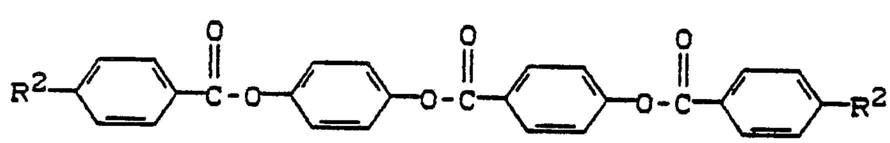

(m = Null, n = 1, o = 1, p = Null)

oder aus den Phenolen (II) bzw. (III) durch Veresterung mit dem reaktiven Carbonsäurederivat (V)

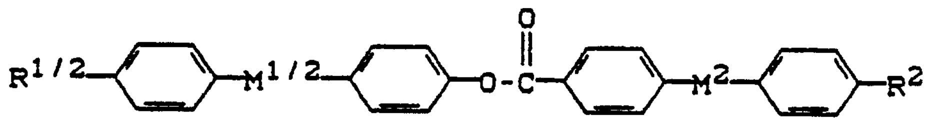

(m = Null, n = 1, o = 1, p = 1)

5-Kern-Verbindungen (m = 1, n = 1, o = 1, p = 1):

werden durch Veresterung der Phenole (II) bzw. (III) mit reaktiven aromatischen Dicarbonsäuen erhalten:

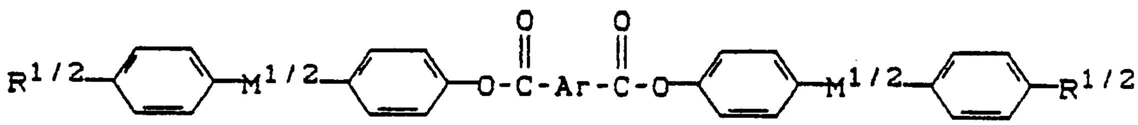

6-Kern-Verbindungen (m = Null, n = 1, o = 1, p = 1):

werden ausgehend von 4-Kern-Verbindungen des folgenden Typs:

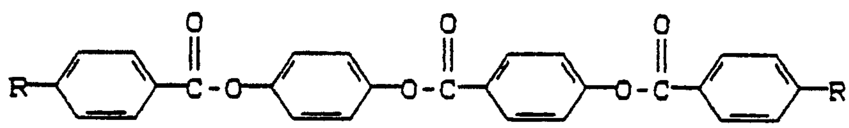

mit R = 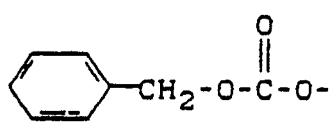

über die Synthesesequenz. 1. Hydrierung (Abspaltung der Schutzgruppe unter Freisetzung des Bisphenols) und 2. Veresterung der beiden phenolischen OH-Gruppen mit einem aromatischen Carbonsäurederivate (VII)

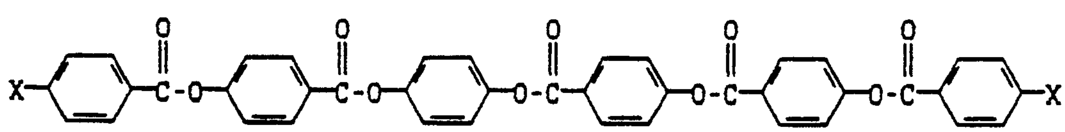

7-Kern-Verbindungen (m = n = o = p = 1):

können aus 3-Kern-Verbindungen, in denen $R^{1,2}$ = X ist,
$M^{1,2}$- $\overset{O}{\overset{\|}{C}}$ -O- und der Ringsubstituent $R^2$ eine Schutzgruppe des Typs

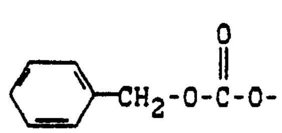 ist,

über folgende Synthesesequenz erhalten werden:

1) Abhydrierung der Schutzgruppe (Freisetzung der phenolischen OH-Funktion)

2) Umsetzung mit einem reaktion-aromatischen Dicarbonsäurederivat (VI)

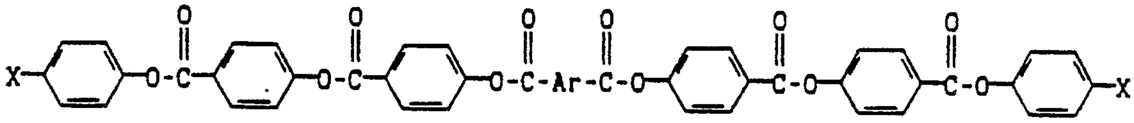

Ausgegend von 5-Kern-Verbindungen, in denen $R^{1/2}$ die Bedeutung der Schutzgruppe

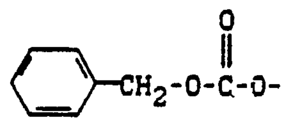

besitzt sind 7-Kern-Verbindungen über die gleiche Synthesesequenz:

1) Abhydrierung der Schutzgruppe und

2) Umsetzung der phenolischen OH-Gruppen mit einem reaktiven aromatischen Carbonsäurederivat (VII) zugänglich:

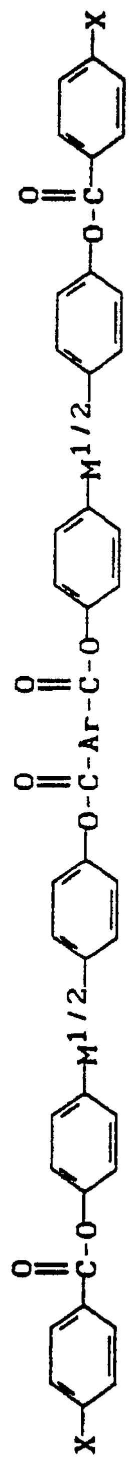

8-Kern-Verbindung (m = Null, n = 2, o = 1, p = 1)

werden ausgehend von 4-Kern-Verbindungen des Typs

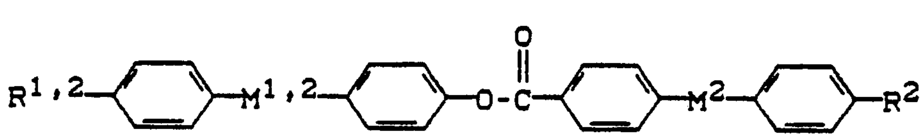

mit $R^{1,2}$ und

$R^2$ = 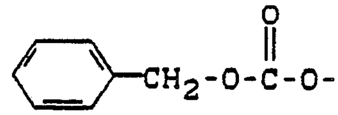

über die Synthesesequenz

1) Abhydrierung der Schutzgruppe

2) Umsetzung der phenolischen OH-Gruppe mit reaktiven Carbonsäurederivaten des Typs (V)

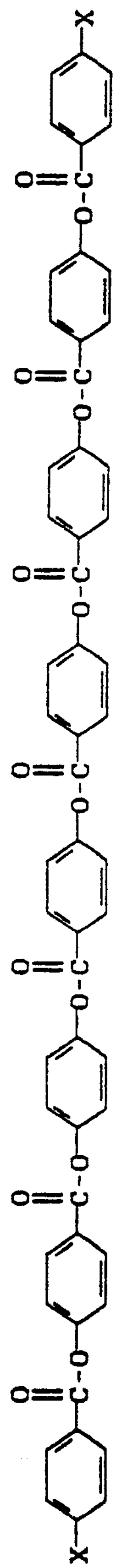

9-Kern-Verbindungen (m = 1, n = 1, o = 2, p = 1)

erhält man durch konsequente Ausnutzung der Schutzgruppentechnik über folgende Synthesesequenz. Veresterung von Phenolen des Typs (II) oder (III) in denen ein Rest $R^1$ bzw. $R^2$ die Bedeutung einer Schutzgruppe besitzt:

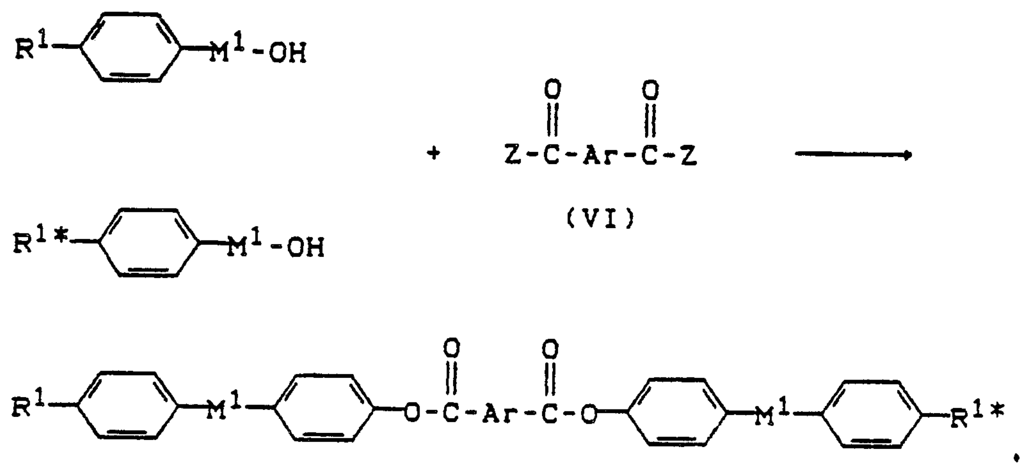

(VI)

Nach Abspaltung der Schutzgruppe durch Hydrierung erfolgt Veresterung dieses Phenols zusammen mit einem 3-Kern-Phenol

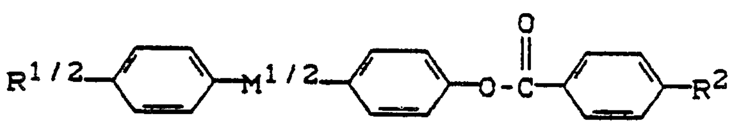

(Hergestellt durch Abspaltung der Schutzgruppe $R^{1/2}$:

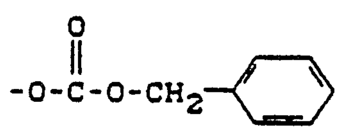 )

und einem weiteren reaktiven aromatischen Dicarbonsäurederivat (VI) zur entsprechenden 9-Kern-Verbindung:

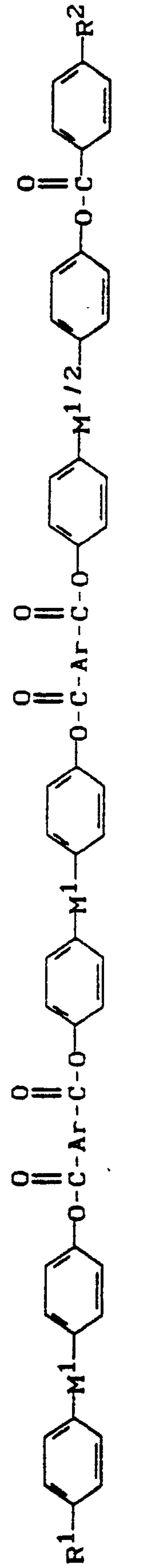

Entsprechend höherkernige Verbindungen mit mehr als 9 aromatischen Ringsystemen lassen sich analog synthetisieren.

Die Verbindungen der Formel (I) einschließlich der Verbindungen 1, 2 und 10 sind als Additive für thermoplastische, aromatische Polycarbonate, für thermoplastische Polycarbonate, für thermoplastische, aromatische Polyestercarbonate und für thermoplastische, aromatische Polyester geeignet, wobei sie sowohl eine Verbesserung der Steifigkeit und der Biegefestigkeit dieser Thermoplasten als auch eine Verbesserung der Verarbeitbarkeit dieser Thermoplasten bewirken. Eine derartige Verwendung ist in den Literaturstellen,. die die Verbindungen 1, 2 und 10 beschreiben, nicht erwähnt und auch nicht nahegelegt.

Die Wirkung der Verbindungen der Formel (I) ist insoweit überraschend, da aus der JA 51 071 346 bekannt ist, daß aromatische Ester der Struktur

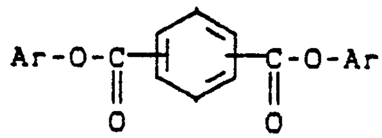

worin

Ar ein aromatischer Rest ist, der gegebenenfalls durch Halogen, $C_1$-$C_{10}$-Alkyl oder Aralkyl substiutiert ist, als Weichmacher für aroamtische Polycarbonate dienen, und zwar in Mengen von 0,01 bis 10 Gew.-%.

Der Zusatz von flüssig-kristallinen Polymeren zu Thermoplasten ist bekannt (siehe beispielsweise EP-OS 0 030 417). Ein Nachteil ist jedoch im allgemeinen die begrenzte Verträglichkeit der Thermoplasten mit den flüssig-kristallinen Polymeren, wobei vor allem die Transparenz der Thermoplasten beeinträchtigt oder gar aufgehoben wird.

Umschmelzbare, whiskerartige Poly-(p-oxybenzoat)kristalle werden in der US-Patentschrift 4 673 724 als Verstärkungskomponente beschrieben. Diese sind wegen ihrer sehr hohen Schmelz- bzw. Erweichungspunkte jedoch sehr schwer herstellbar und mit anderen Polymeren besonders unverträglich.

Eine Verbesserung der Verträglichkeit zwischen flüssig-kristalliner Phase und thermoplastischer Matrix wird in der EP 0 071 968 für teilkristalline Polymere wie Polyalkylenterephthalat beschrieben, wobei die bessere Verträglichkeit der Phasen dadurch erreicht wird, daß als flüssig-kristalline Komponenten nur Oligomere auf Basis von Terephthalsäure, 2,6-Naphthalindicarbonsäure und Diphenolen wie 3,3′,5,5′-Tetramethyl-4,4′-dihydroxydiphenyl und Trimethylhydrochinon mit Molekulargewichten von 2000-10 000 eingesetzt werden. Entsprechend den niedrigen Molekulargewichten der flüssig-kristallinen Komponente sind die erzielten Verstärkungseffekte nur mäßig. So wird zwar der E-Modul von Polyethylenterephthalat-Fasern erhöht, die Zugfestigkeit aber erniedrig.

In situ erzeugte Mischungen aus flüssig-kristallinen Polymeren und amorphen Thermoplasten sind ebenfalls bekannt. (Siehe beispielsweise G. Kiss, Polymer Engeneering & Science, 27, Seiten 410-423 (1987). Derartige Mischungen haben jedoch den Nachteil, daß die erreichbaren Verstärkungseffekte in starkem Maß von den Mischungsbedingungen abhängen und die Reproduzierbarkeit der Verarbeitungsbedingungen oft problematisch einzuhalten ist.

Hinzu kommt, daß bei der Herstellung derartiger Composites die Mischungspartner sehr unterschiedliche Schmelzviskositäten unter Verarbeitungsbedingungen besitzen, so daß zur Herstellung von solchen Composites nur eine beschränkte Zahl von geeigneten Polymeren bereitsteht.

Als Verarbeitungshilfsmittel für konventionelle Thermoplaste wie aromatische Polyester oder thermoplastisch schwer verarbeitbare, flüssigkristalline Polymere werden chemisch reaktive, flüssig-kristalline, aromatische Ester beschrieben, die durch Umesterung bei höherer Temperatur in die Polymerkette einkondensieren. (Siehe US-Patent 4 650 836). Der Einbau der aromatischen, flüssig-kristallinen Ester in die Polymerkette führt jedoch zu einer chemischen Veränderung der Thermoplas ten. Dies hat den Nachteil, daß in Abhängigkeit der Verarbeitungsbedingungen unterschiedliche Einbauverhältnisse und damit schlecht reproduzierbare Eigenschaften resultieren.

Aus der EP-OS 0 256 470 (Le A 24 738-EP) sind flüssig-kristalline Verbindungen als Kettenverlängerer zur Herstellung von Polyurethanen beschrieben.

Die Mengen an Verbindungen der Formel (I) zur Modifizierung der thermoplastischen, aroamtischen Polycarbonate, der thermoplastischen, aromatischen Polyestercarbonate und der thermoplastischen, aromatischen Polyester beträgt 0,1 Gew.-% bei 30 Gew.-%, vorzugsweise 0,5 Gew.-% bis 25 Gew.-% und insbesondere 1 Gew.-% bis 15 Gew.-%, bezogen jeweils auf Gesamtgewicht aus Verbindungen der Formel (I), und thermoplastischem Polycarbonat, thermoplastischem Polyestercarbonat und thermoplastischem

Polyester.

Gegenstand der vorliegenden Erfindung ist somit auch die Verwendung der Verbindungen der Formel (I) zur Modifizierung von thermoplastischen, aromatischen Polycarbonaten und/oder thermoplastischen, aromatischen Polyestercarbonaten und/oder thermoplastischen, aromatischen Polyester.

Thermoplastische aromatische Polycarbonate im Sinne der vorliegenden Erfindung sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxy diarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Kettenabbrecher dienen beispielsweise Monophenole. Als Verzweiger beispielsweise Trisphenole oder Tetraphenole.

Die Polycarbonate haben mittlere Gewichtsmittelmolekulargewichte $\overline{M}w$ zwischen 10 000 und 300 000, vorzugsweise zwischen 150 000 und 250 000 einseitig und 20 000 bis 40 000 andererseits, ermittelt durch Gelpermeationschromatographie oder durch Messungen der rel. Viskosität in $CH_2Cl_2$ bsi 25° C und einer Konzentration von 0,5 g/pro 100 ml.

Geeignete Diphenole sind z.B. Hydrochinon, Resorcin, 4,4′-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen.

Bevorzugt sind Polycarbonate auf Basis Bis-(4-hydroxyphenyl)-propan-.2,2 (Bisphenol A), bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Drei kernbisphenolen wie $\alpha,\alpha'$-Bis-(4-hydroxyphenyl)-p-diisopropylbenzol. Weitere geeignete Diphenole sowie Herstellung der Polycarbonate sind beispielsweise in den US-Patenten 3 028 365, 3 062 781 und 3 879 347 beschrieben.

Verzweigte Polycarbonte sind beispielsweise im US-Patent 4 185 009 bzw. im deutschen Patent 2 500 092 beschrieben.

Thermoplastische, aromatische Polyester im Sinne vorliegender Erfindung sind solche auf Basis von Diphenolen, aromatischen Dicarbonsäuredichloriden, Kettenabbrechern und gegebenenfalls Verzweigungsmitteln.

Als Diphenole dienen die für die Polycarbonatherstellung vorstehend genannten Verbindungen.

Als Kettenabbrecher dienen Monophenole, als Verzweiger dienen Trisphenole und Tetraphenole.

Darüberhinaus können als Verzweigungsmittel hier bevorzugt auch aromatische Tricarbonsäuretrichloride oder aromatische Tetracarbonsäuretetrachloride oder Säurechloride von noch höherwertigeren aromatischen Carbonsäuren eingesetzt werden.

Sie werden in Mengen von 0.01 bis 1 Mol-%, bezogen auf eingesetzte aromatische Dicarbonsäuredichloride, eingesetzt, während bei Einsatz von phenolischen Verzweigern deren Menge von 0,01 bis 1 Mol-% sich auf eingesetzte Diphenole zur Herstellung des aromatischen Polyesters bezieht.

Verzweigungsmittel zur Herstellung aromatischer Polyester sind beispielsweise in der DE-OS 2 940 024, Seiten 9/10 (Le A 19 932) beschrieben.

Geeignete aromatische Dicarbonsäuredichloride sind:
Terephthalsäuredichlorid,
Isophthalsäuredichlorid,
o-Phthalsäuredichlorid,
Diphenyl-dicarbonsäure-dichlorid,
Diphenylether-dicarbonsäure-dichlorid,
Naphthalindicarbonsäure-dichlorid und deren Gemische.

Bevorzugte Gemische sind solche von Terephthalsäuredichloriden mit Isophthalsäuredichloriden im Verhältnis 20:1 bis 1:20, insbesondere von 7:3 bis 3:7.

Die Herstellung der aromatischen Polyester aus Säurechloriden, Diphenolen, Kettenabbrechern und gegebenenfalls Verzweigern erfolgt vorzugsweise nach dem Verfahren der Phasengrenzflächenpolykondensation in bekannter Weise. (Siehe dazu beispielsweise wiederum die DE-OS 2 940 024).

Thermoplastische aromatische Polyestercarbonate im Sinne vorliegender Erfindung sind solche erhältlich in bekannter Weise aus Diphenolen, Phosgen, aromatischen Dicarbonsäuredichloriden, Kettenabbrechern und gegebenenfalls Verzweigern.

Polyestercarbonate sowie ihre Herstellung sind bekannt. (Siehe beispielsweise E-OS 0 036 080, US-PS 3 169 121 und DE-OS 2 714 544).

Geeignete Diphenole sind die für die Polycarbonatherstellung bereits genannten.

Geeignete aromatische Dicarbonsäuredichloride sind die für aromatische Polyesterherstellung bereits genannten, wobei wiederum Gemische von Terephthalsäuredichloriden mit Isophthalsäuredichloriden in den bereits erwähnten Mischungsverhältnissen besonders geeignet sind.

Geeignete Kettenabbrecher sind Monophenole, wie sie auch für die Polycarbonat- und Polyester-Herstellung geeignet sind.

Geeignete Verzweiger sind die vorstehend für die aromatischen Polyester genannten mehr als zweiwertigen Phenole und mehr als zweiwertigen aromatischen Carbonsäurechloride.

Die aromatischen Polyestercarbonate im Sinne der vorliegenden Erfindung haben bis etwa 80 Mol-%, vorzugsweise bis etwa 50 Mol-% Carbonatgruppen, bezogen auf die Molsumme an Carbonatgruppen und aromatischen Carbonsäureestergruppen.

Sowohl der Ester- als auch der Carbonatanteil der erfindungsgemäßen aromatischen Polyestercarbonate kann in Form von Blöcken oder statistisch verteilt im Polykondensat vorliegen.

Die relative Lösungsviskosität ($\eta$rel) der aromatischen Polyester und Polyestercarbonate liegt im Bereich 1,18 bis 1,4 vorzugsweise 1,22 bis 1,3 (gemessen an Lösungen von 0,5 g Polyestercarbonat in 100 ml $CH_2Cl_2$-Lösung bei 25° C).

Die Einarbeitung der Verbindungen der Formel (I) erfolgt vorzugsweise in die Lösung der Polycarbonate bzw. Polyestercarbonate bzw. Polyester, wie sie bei der Herstellung der Polycarbonate bzw. Polyestercarbonate bzw. Polyester nach dem Phasengrenzflächenverfahren anfallen oder auf einfache Weise aus den Granulaten dieser Kunststoffe mit üblichen Lösungsmitteln hergestellt werden können. Die Lösungen können dann in bekannter Weise beispielsweise via Eindampfextruder aufgearbeitet werden und die modifizierten Thermoplasten in bekannter Weise beispielsweise als Granulat isoliert werden. Die Lösungen können auch direkt zu Folien vergossen werden.

Die Einarbeitung der Verbindungen der Formel (I) kann auch über die Schmelze der Polycarbonate bzw. der Polyestercarbonate bzw. der Polyester erfolgen, beispielsweise mittels Extruder, vorzugsweise mittels Doppelwellenextruder, wobei wiederum die modifizierten Thermoplasten in bekannter Weise biespielsweise als Granulat isoliert werden können.

Gegenstand ist somit außerdem ein Verfahren zur Einarbeitung der Verbindungen der Formel (I) in thermoplastische, aromatische Polycarbonate und/oder thermoplastische, aromatische Polyestercarbonate und/oder thermoplastische, aromatische Polyester, das dadurch gekennzeichnet ist, daß man die Verbindungen der Formel (I) in Mengen von 0,1 Gew.-% bis 30 Gew.-%, vorzugsweise von 0,5 Gew.-% bis 25 Gew.-% und insbesondere von 1 Gew.-% bis 15 Gew.-% Lösungen von thermoplastischen, aromatischen Polycarbonaten und/oder thermoplastischen, aromatischen Polyestercarboanten und/oder thermoplastischen, aromatischen Polyestern in für diese Thermoplasten üblichen Lösungsmitteln zudosiert und diese Lösungen dann in bekannter Weise aufarbeitet, oder daß man die Verbindungen der Formel (I) in den oben angegebenen Mengen über die Schmelze der oben genannten Polycarbonate und/oder Polyestercarbonate und/oder Polyester in bekannter Weise einarbeitet und die modifizierten Thermoplasten in bekannter Weise isoliert.

Gegenstand der vorliegenden Erfindung sind außerdem thermoplastische, aromatische Polycarbonate und/oder aromatische Polyestercarbonate und/oder aromatische Polyester, die dadurch gekennzeichnet sind, daß sie Verbindungen der Formel (I) in Mengen von 0,1 Gew.-% bis 30 Gew.-%, vorzugsweise von 0,5 Gew.-% bis 25 Gew.-% und insbesondere von 1 Gew.-% bis 15 Gew.-% enthalten.

Die durch den erfindungsgemäßen Zusatz der Verbindungen der Formel (I) modifizierten Polycarbonate, Polyestercarbonate und Polyester haben außer den bereits genannten vorteilhaften Eigenschaften außerdem ein hohes Maß an Transparenz, insbesondere in den Fällen, in denen Verbindungen der Formel (I) mit 3 bis 5 aromatischen Teilstrukturen eingesetzt werden, wobei wiederum -Ar-als eine aromatische Teilstruktur zählt.

Die erfindungsgemäß durch den Zusatz der Verbindungen der Formel (I) modifizierten Polycarbonate, Polyestercarbonate und Polyester können noch die üblichen für die genannten Thermoplasten geeigneten Stabilisatoren in den für diese Thermoplasten üblichen Mengen enthalten.

Die erfindungsgemäß durch den Zusatz der Verbindungen der Formel (I) modifizierten Polycarbonate, Polyestercarbonate bzw. Polyester eignen sich zur Herstellung von Formkörpern durch Spritzguß- und Extrusionsverarbeitung, vorzugsweise für Anwendungen in denen es auf hohe Steifigkeit, hohe Dimensionsstabilität und gute Oberflächenbeschaffenheit ankommt.

Eine beonders bevorzugte Anwendung der erfindungsgemäßen transparenten Formmassen ist die Herstellung von Formkörpern zur Aufnahme akustischer und/oder optischer Informationen (z.B. Compact-Discs).

Beispiele

A) Herstellung von 4-Hydroxyphenyl-4-hyroxybenzoat (Vorstufe für die Herstellung von Verbindungen der Formel (I)).

A)a) Aus 4-Hydroxybenzoeäsure und Einführung der Carbobenzoxygruppe als Schutzgruppe und Veresterung mit Hydrochinon nach Schotten-Baumann und anschließende Schutzgruppenabspaltung hergestellt. Schmelzpunkt: 245-246 °C. (Siehe W.R. Krigbaum, Eur. Polym. J. 20, S. 225 (1984)).

A)b) Direktveresterung analog DE-OS 3 622 611. 138,1 g p-Hydroxybenzoesäure und 110,1 g Hydrochinon werden zusammen mit 2 g Borsäure und 2,5 g Schwefelsäue in 900 ml Xylol suspendiert und bis zum Ende der Wasserabspaltung unter Rückfluß erhitzt. Das Produkt wird abgesaugt, getrocknet und mit verdünnter Na-Bicarbonat-Lösung gewashen, erneut getrocknet und in 500 ml Aceton gelöst. Es wird heiß vom Ungelösten filtriert und das Produkt aus Wasser gefällt, abgesaugt und getrocknet. Ausbeute: 182 g Schmelzpunkt: 245-247 °C.

Beispiel 1

1-(4-Methoxybenzyloxy)-4-(4-methylbenzoyloxy)-benzol

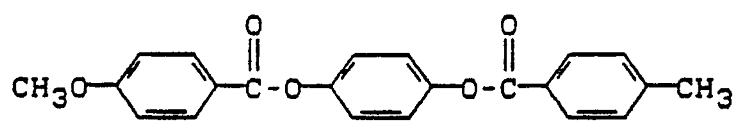

1a) Herstellung von 4-Methoxybenzoesäure-4-hydroxyphenylester

912 g p-Methoxybenzoesäure und 660 g Hydrochinon werden in 4000 ml Xylol in Gegenwart vn 12 g Borsäure und 9 ml Schwefelsäure (98 %ig) bis zum Ende der Wasserabspaltung zum Rückfluß erhitzt. Nach dem Abkühlen werden die ausgefallenen Kristalle abgesaugt und gewaschen und erneut getrocknet. Ausbeute: 1250 g farbloser Kristalle Schmelzpunkt: 162-165 °C.
Schmp. J. Org. Chem. 37, 1425 (1972) 156 °C.

1b)

122,1 g dieses Produktes werden zusammen mit 43,5 g destilliertem Pyridin in 500 ml absolutem Methylenchlorid suspendiert und unter Eiskühlung mit 76,8 g p-Methylbenzoesäurechlorid versetzt. Das Reaktionsgemisch wird 14 h bei Raumtemperatur nachgerührt und mit 500 ml Methylenchlorid verdünnt. Das Reaktionsgemisch wird je 2 x mit 200 ml kalter 5 %iger Salzsäure und 2 x 300 ml Wasser gewaschen. Die organische Phase wird über Natriumsulfat getrocknet, das Trockenmittel abfiltriert und eingeengt. Der Rückstand wird in kaltem Methanol ausgeschlämmt, abgesaugt und getrocknet. Ausbeute: 135 g (≙ 74 % der Theorie). Das flüssig-kristalline Verhalten unter dem Polarisationsmikroskop ist im Bereich von 190-290 °C.

Beispiel 2

1-(4-Methoxyphenyloxycarbonyl)-4-(methoxybenzoyloxy)-benzol

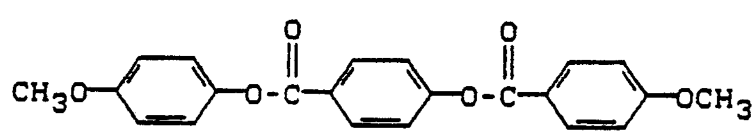

wurde nach der Vorschrift des Beispiels 1b) aus dem bekannten p-Methoxyphenylester der 4-Hydroxybenzoesäure (Siehe J.P. van Meten, B.H. Klanderman , Mol. Cryst., Liquid Cryst. 1973, Vol 22. S. 285 ff.) und p-Methoxybenzoesäurechlorid hergestellt. Ausbeute: 142 g (94 % der Theorie).

Im Bereich zwischen 150 und 300 °C wurde mittels Polarisationsmikroskopie das Vorliegen einer flüssigkristallinen Phase festgestellt.

Beispiel 3

1-(4-Methoxyphenyloxycarbonyl)-4-(4-methylbenzoyloxy)-benzol. Analog zur Vorschrift in Beispiel 1b werden 4-Methoxyphenyl-4-hydroxybenzoat mit 4-Methylbenzoesäurechlorid umgesetzt.
Ausbeute: 11 g (91 % der Theorie).
Flüssigkristallines Verhalten wurde mittels Polarisationsmikroskopie zwischen 180 und 330 °C nachgewiesen.

Beispiel 4

1-(4-Methylphenyloxycarbonyl)-4-(4-methoxybenzoyloxy)-benzol wird analog zur Vorschrift aus Beispiel 1b aus 4-Methylphenyl-4-hydroxybenzoat und 4-Methoxybenzoylchlorid hergestellt.
Ausbeute: 128 g
Im Temperaturbereich von 180-330 °C wurde flüssigkristallines Verhalten beobachtet.

Beispiel 5

4-Benzoyloxybenzoesäure-4-benzoyloxyphenylester wird aus 4-Hydroxyphenyl-4-hydroxybenzoat und Benzoesäurechlorid nach der Vorschrift aus Beispiel 1b hergestellt.
Ausbeute: 530 g (80 % der Theorie)
Im Bereich zwischen 190 und 350 °C wurde mittels Polarisationsmikroskopie eine flüssigkristalline Phase festgestellt.

Beispiel 6

4-(4-Methylbenzoyloxy)-benzoesäure-4-(4-methylbenzoyloxy)-phenylester
345,3 g 4-Hydroxyphenyl-4-hydroxybenzoat werden mit 249 g Pyridin in 3000 ml Methylenchlorid suspendiert und bei T=0 °C innerhalb von 3 h mit 460 g Methylbenzoesäurechlorid versetzt. Das Reaktionsgemisch wird bei Raumtemperatur 14 h nachgerührt. Das Lösungsmittel wird im Vakuum abdestilliert und der Rückstand mit 1,4 l 5 %iger Salzsäure aufgerührt. Das unlösliche Produkt wird abgesaugt, mit Wasser neutral gewaschen und getrocknet.
Ausbeute: 643 g (85 % der Theorie).
Im Bereich von 190-350 °C kann unter dem Polarisationsmikroskop eine flüssigkristalline Phase festgestellt werden.

Beispiel 7

4-(4-Methoxybenzoyloxy)benzoesäure-4-(4-methoxbenzoyloxy)-phenylester wird auf 4-Hydroxyphenyl-4-hydroxybenzoat und 4-Methoxybenzoesäurechlorid nach der Vorschrift aus Beispiel 5 hergestellt.
Ausbeute: 420 g (84 % der Theorie).
Im Bereich zwischen 180-330 °C wurde mittels Polarisationsmikroskopie das Vorliegen einer flüssigkristallinen Phase festgestellt.

Beispiel 8

4-(4-Trifluormethylbenzoyloxy)benzoesäure-4-(4-trifluormethylbenzoyloxy)-phenylester wird aus 4-Hydroxyphenyl-4-hydroxybenzoat und 4-Trifluormethylbenzoylchlorid nach der Vorschrift aus Beispiel 6 hergestellt.
Ausbeute: 12,9 g (80 % der Theorie).
Im Bereich zwischen 180 und 340 °C wurde mittels Polarisationsmikroskopie eine flüssigkristalline Phase festgestellt.

Beispiel 9

4-(4-Chlorbenzoyloxy)benzoesäure-4-(4-chlorbenzoyloxy)-phenylester wird aus 4-Hydroxyphenyl-4-hydroxybenzoat und p-Chlorbenzoesäurechlorid nach der Vorschrift aus Beispiel 5 hergestellt.
Ausbeute: 250 g (98 % der Theorie).
Im Bereich von 160 und 350 °C wurde mittels Polarisationsmikroskopie das Vorliegen einer flüssigkristallinen Phase festgestellt.

Beispiel 10

4,4′-Bis(phenyloxycarbonyl)diphenylterephthalat werden analog der Vorschrift 6 aus Phenyl-4-hydroxybenzoat und Terephthalsäuredichlorid hergestellt.
Ausbeute: 140 g (≙ 75 % der Theorie).

Beispiel 11

4,4′-Bis(4-methylphenyloxycarbonyl)diphenylterephthalat werden analog der Vorschrift aus Beispiel 1/5 aus 4-Methylphenyl-4-hydroxybenzoat und Terephthalsäuredichlorid hergestellt.
Ausbeute:

Beispiel 12

4,4′-Bis(4-methoxyphenyloxycarbonyl)diphenylterephthalat werden analog der Vorschrift aus Beispiel 1 5 aus 4-Methoxyphenyl-4-hydroxybenzoat und Terephthalsäuredichlorid hergestellt.
Ausbeute:

Beispiel 13

4,4′-Bis-(benzoyloxy)-diphenylterephthalat werden analog der Vorschrift aus Beispiel 6 aus 4-Hydroxyphenylbenzoat und Terephthalsäuredichlorid hergestellt.
Ausbeute: 80 g (≙ 84 % der Theorie).

Beispiel 14

4,4′-Bis-(4-methylbenzoyloxy)-diphenylterephthalat werden analog der Vorschrift aus Beispiel 6 aus 4-Hydroxyphenyl-4-methylbenzoat und Terephthalsäuredichlorid hergestellt.
Ausbeute: 73 g (≙ 87 % der Theorie).

Beispiel 15

4,4′-Bis-(4-methoxybenzoyloxy)-diphenylterephthalat werden analog der Vorschrift aus Beispiel 1/5 aus 4-Hydroxyphenyl-4-methoxybenzoat hergestellt.
Ausbeute: 95 g (≙ 88 % der Theorie).

Beispiel 16

4-Hydroxyphenyl-4-(4-methylbenzoyloxy)-benzoat wird analog zur Vorschrift aus Beispiel 6 mit Terephthalsäuredichlorid umgesetzt.
Ausbeute: 45 g (≙ 65 % der Theorie).
1,4-Bis-[[(4-methylbenzoyloxy)-4-benzoyloxy]-4-phenyloxy-carbonyl]benzol.

Tabelle 1

| Produkt | Pol.-Mikroskop Schmp. °C | DSC-Messung $T_u$ °C |
|---|---|---|
| 1 | 195-285 | 198-291 |
| 3 | 135-295 | 141-305 |
| 6 | 194-300 | 201-280 |
| 11 | 165-270 | 169-278 |
| 12 | 250-325 | 249-330 |
| 15 | 230-315 | 232-310 |

II. Herstellung der thermoplastischen Formmassen

Die Herstellung der thermoplastischen Formmassen erfolgt auf zwei Wegen:

a) Zumischen der flüssigkristallinen Verbindung zur Polymerlösung vor der Aufarbeitung und

b) Compoundierung der amorphen, aromatischen Polyester, Polyestercarbonate und Polycarbonate mit den flüssigkristallinen Verbindungen in der Schmelze.

Im folgenden sind die in den Beispielen und Vergleichsbeispielen verwendeten Materialien beschrieben.

Die angegebenen relativen Lösungsviskositäten wurden in Methylenchlorid bei einer Polymerkonzentration von 5 g/l bei 25° C gemessen.

1. Polycarbonat (PC) aus Bisphenol A mit einer rel. Lösungsviskosität $\eta_{rel}$ = 1,280.

2. Polyestercarbonat (APEC) aus Beispiel A mit 80 Gew.-% Esteranteil äquimolaren Mengen Iso und Terephthalsäure, hergestellt gemäß EP 0 036 080 mit einer rel. Lösungsviskosität $\eta_{rel}$ 1,294.

3. Polyester (APE) aus Bisphenol A und äquimolaren Mengen Iso- und Terephthalsäure, hergestellt gemäß DOS 2 940 024 mit einer rel. Lösungsviskosität $\eta_{rel}$ = 1,267.

Die Prüfung der Schlagzähigkeit $a_n$ und Kerbschlagzähigkeit $a_k$ erfolgte an 80 x 10 x 4 mm-Prüfkörpern gemäß DIN 53 453 (ISO/R 179) bei 23° C jeweils an 10 Prüfkörpern.

Die Bestimmung der Biegefestigkeit wurde an 80 x 10 x 4 mm Prüfkörpern gemäß DIN 53 452 (ISO/R 178) durchgeführt. Der Biege-E-Modul wurde gemäß DIN 53 547 ermittelt.

Die Bestimmung der Zugfestigkeit erfolgte am Schulterstab (0,7-fach) gemäß DIN 53 455. Der Zug-E-Modul wurde gemäß der DIN 53 457 ermittelt. Das Fließverhalten in der Schmelze wurde durch die Messung der Schmelzviskosität beurteilt. Die Düse hatte, wenn nichts anderes angegeben, ein Längen- zu Dickenverhältnis (L/D) von 30:1.

Die Zusammensetzung und die Eigenschaften der thermoplastischen Formmassen sind in Tabelle 2 zusammengefaßt.

**Tabelle 2** Thermoplastische Formmassen aus Basis Polycarbonat Makrolon 2800

| Zusammensetzung PC 2800 (%) | LC-Verb. Beisp. | (%) | Herst.-Methode | Schmelzevisk. T=33⁰C; $\gamma=1000s^{-1}$ | $T_{Verarb.}$ | $a_n$ ($kJ/m^2$) | $\sigma_R$ (MPa) | $\epsilon_R$ (%) | Z-E-M (MPa) | $\sigma_B$ (MPa) | $\epsilon_B$ (MPa) | B-E-M (MPa) |
|---|---|---|---|---|---|---|---|---|---|---|---|---|
| 100 | - | 0 | a | 320 | 300 | o.B. | 65 | 80 | 2400 | 95 | 7,4 | 2200 |
| 100 | - | 0 | b | 300 | 320 | o.B. | 64 | 80 | 2570 | 98 | 7,2 | 2300 |
| 95 | 1 | 5 | a | 80 | 260 | 7xo.B. 3x130 | 67 | 65 | 2940 | 120 | 6,8 | 2710 |
| 95 | 1 | 5 | b | 75 | 260 | 8xo.B. 2x140 | 65 | 65 | 2960 | 118 | 6,9 | 2740 |
| 90 | 1 | 10 | a | 40 | 240 | 50 | 70 | 45 | 3300 | 123 | 5,3 | 2980 |
| 90 | 1 | 10 | b | 35 | 240 | 57 | 71 | 45 | 3310 | 121 | 5,4 | 2990 |
| 95 | 3 | 5 | b | 120 | 260 | 9xo.B. 1x130 | 72 | 60 | 3010 | 115 | 7,1 | 2720 |
| 95 | 6 | 5 | b | 230 | 280 | 9xo.B. 1x132 | 66 | 80 | 2770 | 105 | 7,3 | 2530 |
| 95 | 6 | 10 | b | 60 | 280 | 8xo.B. 2x100 | 59 | 80 | 2940 | 111 | 7,0 | 2740 |

**T a b e l l e 2** (Fortsetzung)

| Zusammensetzung PC 2800 (%) | LC-Verb. Beisp. | (%) | Herst.-Methode | Schmelzevisk. T=330°C; γ=1000s⁻¹ | $T_{Verarb.}$ | $a_n$ (kJ/m²) | $\sigma_R$ (MPa) | $\varepsilon_R$ (%) | Z-E-M (MPa) | $\sigma_B$ (MPa) | $\varepsilon_B$ (MPa) | B-E-M (MPa) |
|---|---|---|---|---|---|---|---|---|---|---|---|---|
| 95 | 15 | 5 | b | 50 | 260 | 9xo.B. 1x100 | 70 | 60 | 3050 | 122 | 7,0 | 2730 |

$T_{Verarb.}$ : Verarbeitungstemperatur
$a_n$ : Schlagzähigkeit
$\delta_R$ : Reißfestigkeit
$\varepsilon_R$ : Reißdehnung
Z-E-M : Zug-E-Modul
$\delta_B$ : Biegefestigkeit
$\varepsilon_R$ : Randfaserdehnund
B-E-M : Biege-E-Modul

**Ansprüche**

1. Verbindungen der Formel (I)

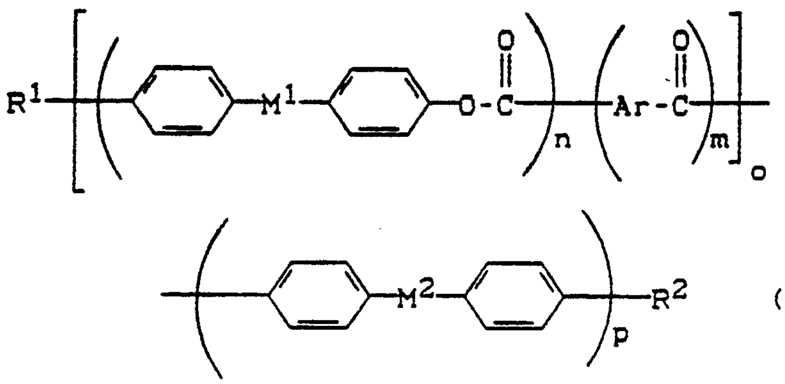

(I)

worin
-Ar ein aromatischer Rest ist der einkernig oder mehrkernig sein, wobei der mehrkernige Rest einbindig verknüpft oder annelliert sein kann,
worin
$R^1$ und $R^2$ gleich oder verschieden sein können und H, Chlor, O-$C_1$-$C_4$-Alkyl, $C_3$-$C_6$-Cycloalkyl, O-$C_6$-$C_{14}$-Aryl, $C_1$-$C_4$-Alkyl, $C_3$-$C_6$-Cycloalkyl, $C_6$-$C_{14}$-Aryl, fluoriertes $C_1$-$C_4$-Alkyl, fluoriertes $C_3$-$C_6$-Cycloalkyl, fluoriertes $C_6$-$C_{14}$-Aryl, oder ein Rest der Formeln (I) a) bis l) sind,

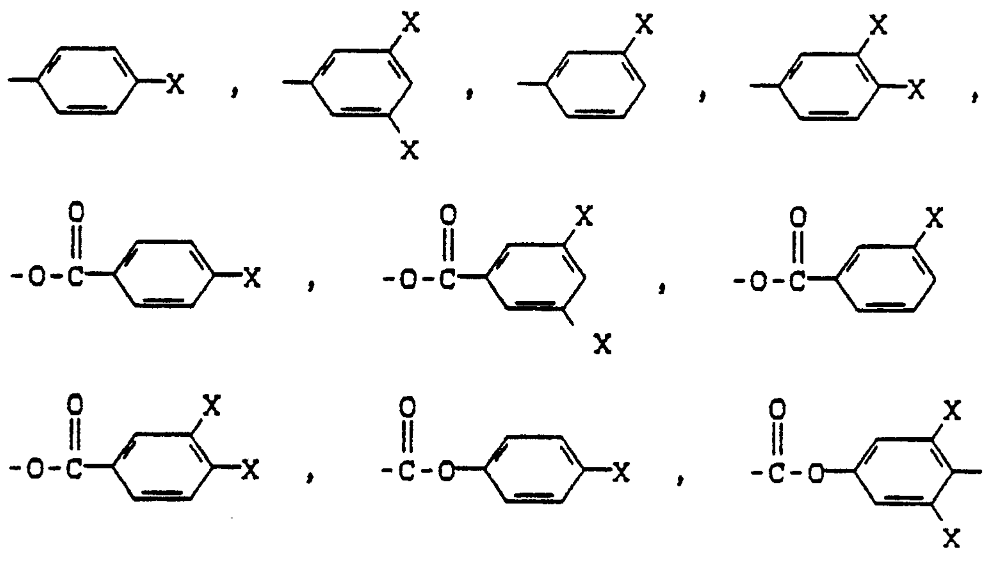

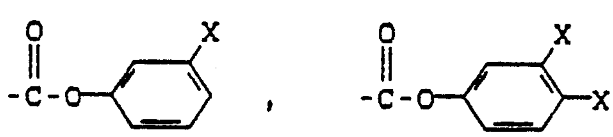

(Ia) - (Il)

wobei
X wiederum die vorstehend für $R^1$ bzw. $R^2$ genannten Reste von H bis fluoriertes $C_6$-$C_{14}$-Aryl ist,
worin -$M^1$- und -$M^2$- gleich oder verschieden sind und zweibündige Reste der Formeln (I.1) bis (I.11)
$-\underset{\underset{O}{\|}}{C}-O-$, $-\underset{\underset{O}{\|}}{C}-NH-$, -N=N-, $-N=\underset{\underset{O}{\downarrow}}{N}-$, -CH=N-, -CH=CH-,
-C≡C-, $-O-\underset{\underset{O}{\|}}{C}-$, $-HN-\underset{\underset{O}{\|}}{C}-$, $-\underset{\underset{O}{\downarrow}}{N}=N-$ und -N=CH- (I.1)-(I.11)

sein können,
und worin
"m" Null, 1 oder 2,
"n" 1 oder 2,
"o" 1, 2 oder 3 und
"p" Null oder 1 sind, wobei im Falle von p = Null
$R^2$ nur (Ia), (Ib), (Ic) oder (Id) sein kann,
und wobei die Verbindungen Nr. 1, 2 und 10 ausgenommen sind.

2. Verbindungen der Formel (I) gemäß Anspruch 1, dadurch gekennzeichnet, daß -Ar- ein Rest (Ar1) bis (Ar4) ist

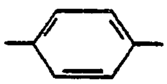 , 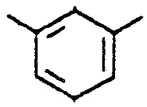 , 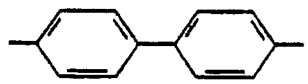 ,

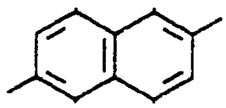

(Ar1)-(Ar4)

3. Verbindungen der Formel (I) gemäß Anspruch 1, dadurch gekennzeichnet daß sie 3 bis 15 aromatische Teilstrucktuten enthalten, wobei der Rest -Ar- als eine Teilstruktur gezählt ist, unabhängig davon, ob der einkernig oder mehrkernig ist.

4. Verbindungen des Anspruchs 3, dadurch gekennzeichnet, daß sie 3 bis 11 aromatische Teilstruckturen enthalten.

5. Verbindungen des Anspruchs 4 dadurch gekennzeichnet, daß sie 3 bis 7 aromatische Teilstrukturen enthalten.

6. Verbindungen der Formel (I) gemäß Anspruch 1, dadurch gekennzeichnet, daß -M-
$-\underset{\underset{O}{\|}}{C}-O-$, $-\underset{\underset{O}{\|}}{C}-NH-$, $-CH=N-$, $-O-\underset{\underset{O}{\|}}{C}$ oder $-NH-\underset{\underset{O}{\|}}{C}-$ oder
$-N=CH-$ ist.

7. Verfahren zur Herstellung der Verbindungen der Formel (I) des Anspruchs 1, dadurch gekennzeichnet,
daß man phenolische Verbindungen der Formeln (II), und/oder (III) und/oder (IV) oder deren Alkalisalze,

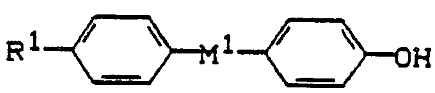 (II)

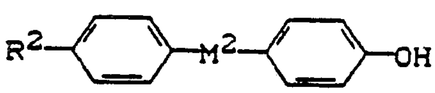 (III)

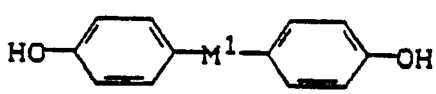 (IV)

worin $R^1$, $R^2$, $M^1$ und $M^2$ die für Formel (I) genannte Bedeutung haben, wobei $R^1$ und $R^2$ zusätzlich noch die Funktion einer leicht abspaltbaren Schutzgruppe haben können, mit reaktiven Derivaten aromatischer Carbonsäuren der Formeln (V) und/oder (VI) und/oder (VII)

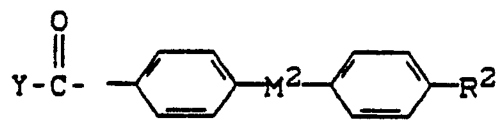

(V)

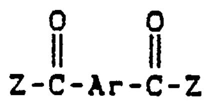

(VI)

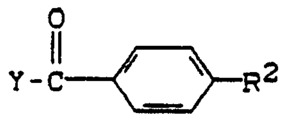

(VII)

worin $M^2$, $R^2$ und Ar wiederum die für Formel (I) genannte Bedeutung haben, worin $R^2$ zusätzlich wiederum noch die Funktion einer leicht abspaltbaren Schutzgruppe haben kann, und worin Y und Z reaktive Reste von aromatischen Carbonsäurederivaten sind, und worin Y außerdem zusätzlich eine leicht abspaltbare Schutzgruppe sein kann,
in Abhängigkeit von der Funktionalität der Reaktanten (II) bis (VII) unter Berücksichtigung der auszunutzenden Schutzgruppen und in Abhängigkeit von den zu erzielenden Werten für die Indices "m", "n", "o" und "p" der Formel (I) nach bekannten Verfahren verestert.

8. Verwendung der Verbindungen der Formel (I) des Anspruchs 1 einschließlich der Verbindungen Nr. 1, 2 und 10 zur Modifizierung von thermoplastischen, aromatischen Polycarbonaten und/oder thermoplastischen, aromatischen Polyestercarbonaten und/oder thermoplastischen, aromatischen Polyestern.

9. Verfahren zur Einarbeitung der Verbindungen der Formel (I) des Anspruchs 1 einschließlich der Verbindungen Nr. 1, 2 und 10 in thermoplastische, aromatische Polycarbonate und/oder thermoplastische, aromatische Polyestercarbonate und/oder thermoplastische, aromatische Polyester, das dadurch gekennzeichnet ist, daß man die Verbindungen der Formel (I) einschließlich der Verbindungen 1, 2 und 10 in Mengen von 0,1 Gew.-% bis 30 Gew.-%, Lösungen von thermoplastischen, aromatischen Polycarbonaten und/oder thermoplastischen, aromatischen Polyestercarboanten und/oder thermoplastischen, aromatischen Polyestern in für diese Thermoplasten üblichen Lösungsmitteln zudosiert und diese Lösungen dann in bekannter Weise aufarbeitet, oder daß man die Verbindungen der Formel (I) einschließlich der Verbindungen 1, 2 und 10 in den oben angegebenen Mengen über die Schmelze der oben genannten Polycarbonate und/oder Polyestercarbonate und/oder Polyester in bekannter Weise einarbetiet und die modifizierten Thermoplasten in bekannter Weise isoliert.

10. Thermoplastische, aromatische Polycarbonate und/oder aromatische Polyestercarboante und/oder aromatische Polyester, die dadurch gekennzeichnet sind daß sie Verbindungen der Formel (I) des Anspruchs 1 einschließlich der Verbindungen Nr. 1, 2 und 10 in Mengen von 0,1 Gew.-% bis 30 Gew.-% enthalten.